# EUROPEAN PATENT SPECIFICATION

(11) **EP 0 681 991 B1**
(45) Date of publication and mention of the grant of the patent: **11.08.1999**
(21) Application number: 95107152.1
(22) Date of filing: 11.05.1995
(51) Int. Cl.: C01B 39/02

(54) **Clinoptilolite and method for synthesizing the same**
Clinoptilolit und Verfahren zu seiner Herstellung
Clinoptilolite et méthode pour la préparer

(30) Priority: 12.05.1994 JP 9838394; 23.03.1995 JP 6384495
(43) Date of publication of application: 15.11.1995
(73) Proprietor: Tosoh Corporation, Shinnanyo-shi, Yamaguchi-ken, 746-8501 (JP)
(72) Inventor: Satokawa, Shigeo, Edogawa-ku, Tokyo (JP); Itabashi, Keiji, Shinnanyo-shi, Yamaguchi (JP)
(74) Representative: VOSSIUS & PARTNER

(56) References cited:
- US-A- 4 623 529
- NATURE, vol. 304, 21 July 1983 pages 255-257, CHENG-HANG CHI ET AL
- CHEMICAL ABSTRACTS, vol. 87, no. 2, 11 July 1977 Columbus, Ohio, US; abstract no. 8837v, GOTO & AM. MINERAL, vol. 62, no. 3-4, 1977 pages 330-332,

## Description

The present invention relates to novel clinoptilolite having 90 % or more clinoptilolite crystalline phase and a method for synthesizing the same.

Synthetic clinoptilolites are industrially useful as molecular sieving agents for separating specified molecules by selective adsorption, dehydrating agents for gases or liquids, and ion exchangers for selectively exchanging specified ions contained in aqueous solutions. Further, since synthetic clinoptilolites in which metal cations are exchanged by hydrogen ions act as a solid acid, they are also industrially useful as solid acid catalysts and the like.

Various methods for synthesizing clinoptilolite have hitherto been proposed. For example, a method is reported in which an alkali source composed of sodium hydroxide and/or potassium hydroxide is added to a reactant mixture (SiO₂/Al₂O₃ molar ratio: 8 or 10) prepared using colloidal silica, and the resulting mixture is heated to a temperature ranging from 120 to 195°C to obtain clinoptilolite (Nature, 304, 255, July 21, 1983). However, pure clinoptilolite was only obtained when sodium hydroxide alone or potassium hydroxide alone was used as the above alkali source and seed crystals were added in an amount of 10 %. When both sodium hydroxide and potassium hydroxide were used, or when no seed crystals were used, pure clinoptilolite was not obtained. Further, even when the seed crystals were added, the composition range of the reaction mixture to give clinoptilolite is extremely restricted. It is therefore difficult to produce clinoptilolite stably.

On the other hand, US-A- 4,623,529 discloses the method for synthesizing clinoptilolite comprising heating a reactant mixture having a composition comprising fine amorphous silica, an alumina source, an alkali and clinoptilolite seed crystals ((2.1±0.5)Na₂O•Al₂O₃•(10.0±2.0)SiO₂•(110.1±50.0)H₂O) at about 100 to 200°C for a period of about 240 hours or less. According to this method, the molar ratio range of SiO₂/Al₂O₃ in the reactant mixture is widened a little. However, it is indispensable to add seed crystals in an amount of 1 to 12 %, and moreover, the crystallinity of clinoptilolite is usually as low as about 30 to 70 %.

Thus, methods for synthesizing pure clinoptilolite from chemical raw materials alone without the use of seed crystals have never known. Also, when the seed crystals are used, the composition range of the reaction mixture from which clinoptilolite is obtained is very narrow, or the crystallinity of the resulting of clinoptilolite is low.

An object of the present invention is to provide novel clinoptilolite in a mixed system of Na and K .

Another object of the present invention is to provide a method for synthesizing clinoptilolite, by which pure clinoptilolite can be synthesized using raw materials having a wide composition range, and by which clinoptilolite having a high crystallinity can be synthesized for a short period of time when seed crystals are used. The first object has been achieved by clinoptilolite having 90 % or more clinoptilolite crystalline phase which is a tabular crystal and is represented by the following formula:

x(Na,K)₂O·Al₂O₃·ySiO₂·zH₂O

(wherein x = 0.8-1.2, y = 8.0-12.0, z ≥ 0 and K/(K+Na) = 0.20-0.95). Further, the present invention provides clinoptilolite described above, wherein the tabular crystals have a ratio of the thickness to the length of major axis within the range from 0.001 to 0.5.

The second object has been achieved by a method for synthesizing novel clinoptilolite described above comprising heating a mixture of a silica source, an alumina source, water and sodium hydroxide and/or potassium hydroxide (this mixture is hereinafter referred to as a "raw material mixture", and seed crystals described below shall not be considered as a component of the "raw material mixture") having the following composition in molar ratio at 100 to 200°C with stirring:

SiO₂/Al₂O₃ = 8-20

OH/SiO₂ = 0.25-0.50

K/(K+Na) = 0.2-0.80

H₂O/SiO₂ = 10-100.

The present invention also include the above method for synthesizing clinoptilolite, wherein clinoptilolite crystals are added as seed crystals to the raw material mixture in an amount of 1 to 20 % by weight based on the raw material mixture.

Fig. 1 is the X-ray diffraction pattern of a product obtained in Example 1.

Fig. 2 is the X-ray diffraction pattern of a product obtained by heat treating the product of Example 1 in an electric furnace at 600°C for 1 hour.

Examples of the silica source to be used in the present invention include sodium silicate, potassium silicate, amorphous silica, silica sol, silica gel, kaolinite and diatom earth. Examples of the alumina source to be used in the present invention include sodium aluminate, potassium aluminate, aluminum hydroxide, aluminum chloride, aluminum nitrate and aluminum sulfate. For the mole number of SiO₂ and that of Al₂O₃ in the above formulas, Si contained in the silica source and Al contained in the alumina source in the raw material mixture are converted to the mole number of the oxide of Si and that of the oxide of Al, respectively. A granular amorphous aluminosilicate homogeneous phase compound described in JP-B-63-46007 (the term "JP-B" as used herein means an "examined Japanese patent publication") which is obtained by reacting an aqueous solution of an alkali silicate with an aluminum-containing aqueous solution concurrently and continuously can also be used as a suitable material for the silica source and the alumina source. The mole number of H₂O is the total mole number of water, the water of crystallization and the H₂O converted value of the hydroxides other than sodium hydroxide and potassium hydroxide (for example, 1 mole of Al(OH)₃ shall contain 1.5 moles of H₂O, considering that aluminum hydroxide Al(OH)₃ consists of 0.5 Al₂O₃ and 1.5 H₂O). The mole number of OH in the above formula is the total of the mole number of sodium hydroxide and that of potassium hydroxide. Examples of the Na source and the K source include sodium compounds and potassium compounds in the above silica sources and alumina sources, when they are used, as well as sodium hydroxide and potassium hydroxide. Further, inorganic salts such as chlorides and sulfates, and organic salts such as acetates can also be used. The mole number of Na and that of K respectively mean the total mole number of Na of all sodium compounds and that of K of all potassium compounds contained in these raw materials.

As described above, the raw material mixture must have the following composition in molar ratio:

SiO₂/Al₂O₃ = 8-20

OH/SiO₂ = 0.25-0.50

K/(K+Na) = 0.2-0.80

H₂O/SiO₂ = 10-100.

In these, the combination of the molar ratio of OH/SiO₂ and that of K/(K+Na) is particularly important. A molar ratio of OH/SiO₂ of lower than 0.25 or higher than 0.50 results in easy production of zeolites other than clinoptilolite or minerals other than zeolite. Further, a molar ratio of K/(K+Na) of lower than 0.20 or higher than 0.80 results in easy production of zeolites other than clinoptilolite.

The composition ranges are preferably:

SiO₂/Al₂O₃ = 10-12

OH/SiO₂ = 0.28-0.32

K/(K+Na) = 0.40-0.60

H₂O/SiO₂ = 10-100

or

SiO₂/Al₂O₃ = 12-14

OH/SiO₂ = 0.38-0.42

K/(K+Na) = 0.40-0.60

H₂O/SiO₂ = 10-100.

Within these ranges, clinoptilolite having a higher crystallinity is easily crystallized out.

Crystallization scarcely proceeds at a reaction temperature of lower than 100°C, whereas a reaction temperature of higher than 200°C does not provide a particular advantage, only resulting in the necessity of a high-temperature high-pressure type reaction vessel.

The reaction time is about 1 to 15 days.

The reaction procedure must be conducted with stirring. If stirring is not carried out, the crystallization rate is decreased, and it becomes difficult to obtain clinoptilolite high in crystallinity from the raw material mixture having a wide composition range.

Further, the crystallization time can be significantly decreased by addition of seed crystals to the raw material mixture. The amount of the seed crystals to be added is 1 to 20 % by weight based on the raw material mixture. If the seed crystals are added in an amount of less than 1 % by weight, the effect of shortening the crystallization time is little. Alternatively, even if the seed crystals are added in an amount of more than 20 % by weight, the effect is not improved, only resulting in lowered productivity. As the seed crystals, either natural clinoptilolite or synthetic clinoptilolite may be used.

After completion of crystallization, the resulting crystals are separated from the mother liquid, washed with water, and dried to a crystalline powder.

As described above, clinoptilolite can be produced having 90% or more clinoptilolite crystalline phase, which is a tabular crystal and is represented by the following general formula:

x(Na,K)₂O·Al₂O₃·ySiO₂·zH₂O

wherein x = 0.8-1.2, y = 8.0-12.0, z ≥ 0 and K/(K+Na) = 0.20-0.95.

Although the mechanism of the formation of clinoptilolite according to the present invention is still not fully elucidated, it is conceivable that the concentration of alkaline components contained in the raw material mixture and the concentration of K⁺ ions, namely the OH/SiO₂ ratio and the K/(K+Na) ratio within a specified range contribute to the dissolution of an aluminosilicate gel and the formation of a clinoptilolite type aluminosilicate framework, and that stirring of the raw material mixture promotes them.

The addition of the seed crystals may further promote this framework formation reaction.

The present invention will be described with reference to examples in detail below, but these are not to be construed as limiting the invention.

### EXAMPLE 1

A mixture of 33.3 g of sodium hydroxide (NaOH = 99 % by weight, the same is applied hereinafter), 54.4 g of potassium hydroxide (KOH = 85 % by weight, the same is applied hereinafter) and 78.3 g of aluminum hydroxide (Al(OH)₃ = 99.6 % by weight, the same is applied hereinafter) was heated and dissolved, followed by addition of 2475 ml of pure water. Then, 375 g of white carbon (Nipil VN3, manufactured by Nippon Silica Industrial Co. Ltd.; SiO₂ = 88 % by weight, the same is applied hereinafter) was added to prepare a raw material mixture having the following molar composition ratio:

SiO₂/Al₂O₃ = 11

OH/SiO₂ = 0.30

K/(K+Na) = 0.50

H₂O/SiO₂ = 25.

This mixture was placed in an autoclave with a capacity of 5,000 ml, and heated with stirring at 150°C for 144 hours. After cooling, solid materials were separated and thoroughly washed with water, followed by drying overnight at 110°C.

The resulting product was analyzed. As a result, the SiO₂/Al₂O₃ molar ratio was 8.4, the K/(K+Na) molar ratio was 0.73, and the (Na, K)₂O/Al₂O₃ molar ratio was 1.0. The chemical composition formula thereof is as follows:

0.73K₂O·0.27Na₂O·Al₂O₃·8.4SiO₂·nH₂O

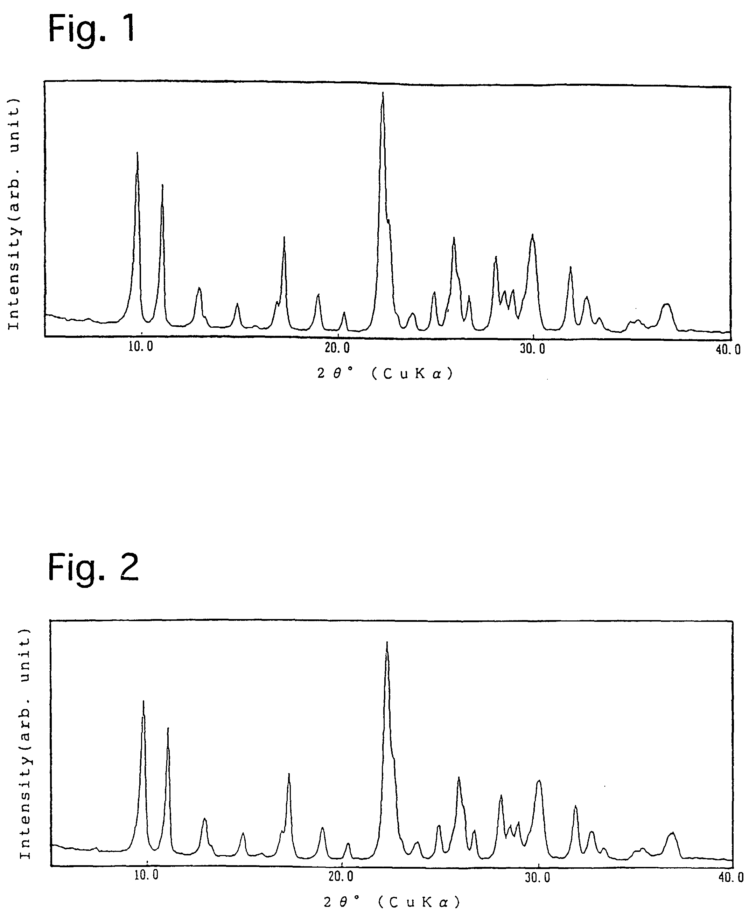

The X-ray diffraction pattern of the product is shown in Fig. 1. The X-ray diffraction data of the product and the X-ray diffraction data of HEU type zeolite for comparison are shown in Table 1.

**TABLE 1**

| X-Ray Diffraction Data of HEU Type Zeolite | | X-Ray Diffraction Data of Product of Example 1 | |
|---|---|---|---|
| d-Spacing (Å) | Relative Intensity | d-Spacing (Å) | Relative Intensity |
| 11.94 | 4 | 12.01 | w |
| 8.98 | 100 | 9.06 | vs |
| 7.99 | 62 | 8.01 | vs |
| 6.87 | 6 | 6.87 | m |
| 6.79 | 17 | 6.83 | m |
| 6.69 | 3 | 6.70 | w |
| 5.97 | 12 | 5.98 | m |
| 5.26 | 12 | 5.25 | w(sh) |
| 5.16 | 33 | 5.15 | s |
| 4.66 | 22 | 4.68 | m |
| 4.37 | 8 | 4.38 | m |
| 4.00 | 64 | | |
| 3.99 | 37 | 3.99 | vs |
| 3.98 | 57 | | |
| 3.93 | 24 | 3.93 | m(sh) |
| 3.91 | 32 | | |
| 3.56 | 33 | 3.56 | m |
| 3.43 | 55 | 3.44 | s |
| 3.40 | 20 | 3.40 | w(sh) |
| 3.34 | 21 | 3.33 | m |
| 3.18 | 49 | 3.18 | s |
| 3.13 | 38 | 3.13 | m |
| 3.09 | 25 | 3.09 | m |
| 3.01 | 16 | | |
| 2.99 | 46 | 2.98 | s |
| 2.98 | 31 | | |
| 2.97 | 14 | | |
| 2.82 | 48 | 2.81 | s |
| 2.81 | 15 | | |
| 2.74 | 12 | 2.74 | m |
| 2.73 | 14 | | |

The product was heat treated in an electric furnace at 600°C for 1 hour. The X-ray diffraction pattern of the heat-treated product is shown in Fig. 2.

The X-ray diffraction data of this product are essentially identical to the X-ray diffraction data of HEU type zeolite. From this fact, it is indicated that the product in this Example is apparently pure clinoptilolite.

For the resulting product, typical crystals were observed under a scanning electron microscope (JSM-6301F, manufactured by JEOL Ltd. (Nihon Denshi); magnification: 20,000X; acceleration voltage: 3 kV). As a result, the length of major axis was 5.0 µm, the thickness was 0.2 µm, and therefore the (thickness/length of major axis) ratio was 0.04.

### EXAMPLE 2

The procedure was repeated in the same manner as in Example 1 with the exception that the conditions shown in Table 2 were employed. The X-ray diffraction pattern of the product was substantially identical to that of Fig. 1.

### EXAMPLE 3

To a mixture of 118 g of sodium aluminate (NaAlO₂, 70 % by weight), 26.3 g of sodium hydroxide and 123.5 g of potassium chloride (KCl, 99.5 % by weight), 2475 ml of pure water was added, and sufficiently stirred to dissolve it. Then, 375 g of white carbon was added to prepare a raw material mixture. This mixture was placed in an autoclave with a capacity of 5,000 ml, and heated with stirring at 150°C for 144 hours to crystallize a product. The X-ray diffraction pattern of the product was substantially identical to that of Fig. 1.

### EXAMPLES 4 TO 6

The procedure was repeated in the same manner as in Example 1 with the exception that the product of Example 1 was used as seed crystals, and that the conditions shown in Table 2 were employed. The X-ray diffraction patterns of the products were substantially identical to that of Fig. 1. Although a peak showing the presence of a small amount of mordenite was observed for each of the products of Examples 3 and 6, it was confirmed that each product is mainly composed of crystalline clinoptilolite.

For the product obtained in Example 4, typical crystals were observed under a scanning electron microscope in the same manner as in Example 1. As a result, the length of major axis was 3.1 µm, the thickness was 0.27 µm, and therefore the (thickness/length of major axis) ratio was 0.087.

### COMPARATIVE EXAMPLE 1

A synthesis experiment was conducted in accordance with the method disclosed in US-A-4,623,529. That is, a mixture of 100 g of sodium hydroxide and 78 g of aluminum hydroxide was heated and dissolved, followed by addition of 2160 ml of pure water. Then, 409 g of white carbon was added to prepare a raw material mixture having the following chemical composition ratio:

2.5Na₂O•Al₂O₃•12SiO₂•240H₂O.

Natural clinoptilolite was added thereto as seed crystals in an amount of 10 % by weight based on the weight of the reaction mixture. Then, the mixture was placed in an autoclave with a capacity of 5,000 ml, and heated with stirring at 150°C for 96 hours to crystallize a product.

The product was only mordenite, and no clinoptilolite was produced.

### COMPARATIVE EXAMPLE 2

The procedure was repeated in the same manner as in Example 1 with the exception that the OH/SiO₂ molar ratio was changed to 0.6, and that the product of Example 1 was added to the raw material mixture in an amount of 1 % by weight based on the raw material mixture, followed by heating at 180°C for 24 hours.

The product was feldspar, and no zeolite was produced.

Conditions not shown above are shown in Table 2, and results are shown in Table 3.

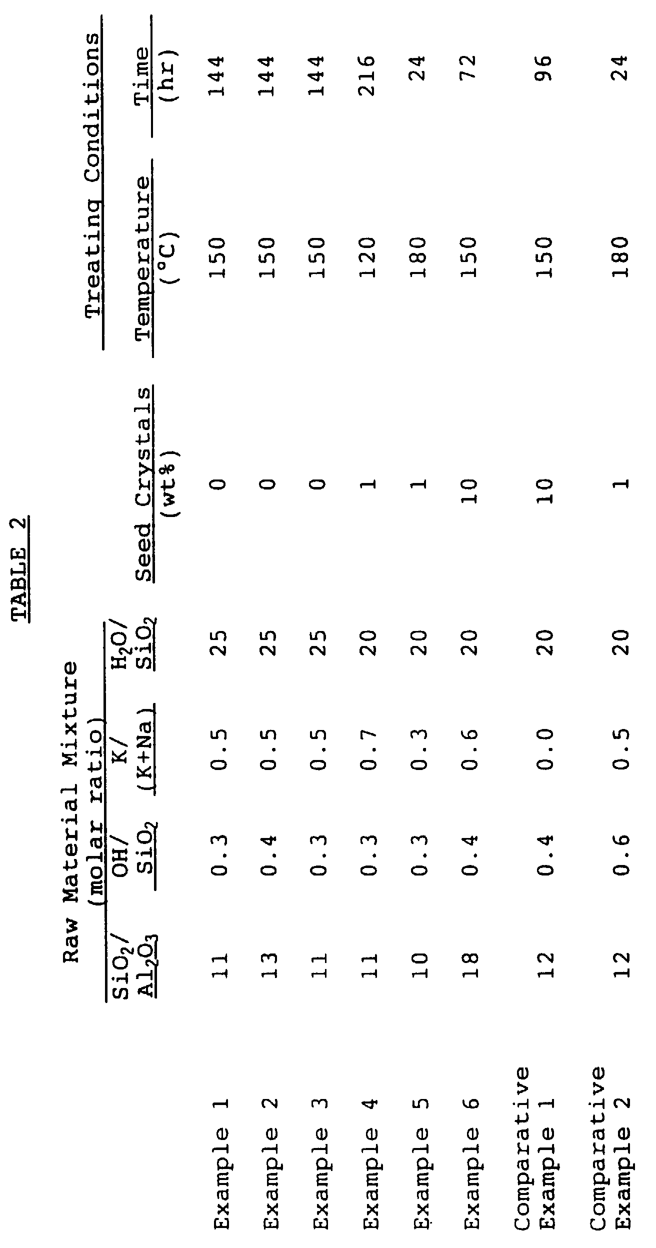

**TABLE 3**

| | Content of Clinoptilolite Crystalline Phase (%) | Impurity Phase | SiO₂/Al₂O₃ (molar ratio) | K/(K+Na) (molar ratio) |
|---|---|---|---|---|
| Example 1 | 100 | not observed | 8.4 | 0.73 |
| Example 2 | 100 | not observed | 9.9 | 0.81 |
| Example 3 | 95 | mordenite | 8.7 | 0.75 |
| Example 4 | 100 | not observed | 9.2 | 0.87 |
| Example 5 | 100 | not observed | 8.2 | 0.42 |
| Example 6 | 90 | mordenite | 11.2 | 0.82 |
| Comparative Example 1 | 0 | mordenite | | |
| Comparative Example 2 | 0 | feldspar | | |

As described above, according to the present invention, pure clinoptilolite having a crystal structure showing the X-ray diffraction data substantially identical to the X-ray diffraction data shown in "X-Ray Diffraction Data of HEU Type Zeolite" of Table 1, and having a chemical composition represented by (0.8-1.2)(Na, K)₂O·Al₂O₃·8-12SiO₂ in dry base can be synthesized using raw materials having a wide composition range, even when seed crystals are not used. Further, if seed crystals are used, clinoptilolite having a high crystallinity can be synthesized for a short period of time.

For clinoptilolite of the present invention, the X-ray diffraction pattern thereof does not substantially vary, namely the crystal structure does not change, even when it is heated in the air at 600°C for 1 hour. This means that the clinoptilolite of the present invention has a good heat resistance.

The SiO₂/Al₂O₃ molar ratio of the product according to the present invention is controllable within the range from 8 to 12 by selecting the mixing ratio of the raw materials within the range of the present invention, and the cationic species can be easily exchanged by another ion by ion exchange. Accordingly, various types of clinoptilolite suitable for respective applications can be provided.

## Claims

1. Clinoptilolite having 90% or more clinoptilolite crystalline phase, which is a tabular crystal and is represented by the following formula:
x(Na,K)₂O·Al₂O₃·ySiO₂·zH₂O
wherein x = 0.8-1.2, y = 8.0-12.0, z ≥ 0 and K/(K+Na) = 0.20-0.95).

2. The clinoptilolite of claim 1, wherein the tabular crystals have a ratio of the thickness to the length of major axis within the range from 0.001 to 0.5.

3. A method for synthesizing the clinoptilolite of any one of claims 1 or 2 comprising heating a raw material mixture comprising a silica source, an alumina source, water and sodium hydroxide and/or potassium hydroxide having the following composition in molar ratio at 100 to 200°C with stirring:
SiO₂/Al₂O₃ = 8-20
OH/SiO₂ = 0.25-0.50
K/(K+Na) = 0.2-0.80
H₂O/SiO₂ = 10-100.

4. The method of claim 3, wherein clinoptilolite crystals are added as seed crystals to the raw material mixture in an amount of 1 to 20 % by weight based on the raw material mixture.

5. The method of claim 3 or 4, wherein said heating of the raw material mixture is carried out for about 1 to 15 days.

## Patentansprüche

1. Clinoptilolit mit 90% oder mehr kristalliner Clinoptilolitphase, welcher ein Tafelkristall ist und durch die folgende Formel dargestellt wird:
x(Na, K)₂O·Al₂O₃·ySiO₂·zH₂O
wobei x = 0,8-1,2, y = 8,0-12,0, z ≥ 0 und K/(K+Na) = 0,20-0,95.

2. Clinoptilolit gemäß Anspruch 1, wobei die Tafelkristalle ein Verhältnis von Dicke zu Hauptachsenlänge innerhalb des Bereichs von 0,001 bis 0,5 aufweisen.

3. Syntheseverfahren des Clinoptilolits gemäß einem der Ansprüche 1 oder 2, umfassend Erhitzen eines Rohmaterialgemischs, umfassend eine Siliciumdioxidquelle, eine Aluminiumoxidquelle, Wasser und Natriumhydroxid und/oder Kaliumhydroxid mit der folgenden Zusammensetzung in Molverhältnis auf 100-200°C unter Rühren
SiO₂/Al₂O₃ = 8 - 20
OH/SiO₂ = 0,25 - 0,50
K/(K+Na) = 0,2 - 0,80
H₂O/SiO₂ = 10 - 100.

4. Verfahren gemäß Anspruch 3, wobei Clinoptilolitkristalle als Keimkristalle dem Rohmaterialgemisch in einer Menge von 1 bis 20 Gewichts-%, bezogen auf das Rohmaterialgemisch, zugesetzt werden.

5. Verfahren gemäß Anspruch 3 oder 4, wobei das Erhitzen des Rohmaterialgemischs etwa 1 bis 15 Tag(e) lang durchgeführt wird.

## Revendications

1. Clinoptilolite ayant 90 % ou plus de phase cristalline de clinoptilolite qui est un cristal tabulaire et qui est représentée par la formule suivante :
x(Na,K)₂O.Al₂O₃.ySi₂.zH₂O
où x = 0,8-1,2, y = 8,0-12,0, z ≥ 0 et K/(K+Na) = 0,20-0,95.

2. Clinoptilolite selon la revendication 1, dans laquelle les cristaux tabulaires ont un rapport de l'épaisseur à la longueur du grand axe dans le domaine de 0,001 à 0,5.

3. Procédé de synthèse de la clinoptilolite selon l'une quelconque des revendications 1 et 2 comprenant le chauffage d'un mélange de matières premières comprenant une source de silice, une source d'alumine, de l'eau et de l'hydroxyde de sodium et/ou de l'hydroxyde de potassium ayant la composition suivante en rapport molaire à 100 à 200°C sous agitation :
SiO₂/Al₂O₃ = 8-20
OH/SiO₂ = 0,25-0,50
K/(K+Na) = 0,2-0,80
H₂O/SiO₂ = 10-100.

4. Procédé selon la revendication 3, dans lequel des cristaux de clinoptilolite sont ajoutés en tant que cristaux d'ensemencement au mélange de matières premières en une quantité de 1 à 20 % en masse par rapport au mélange de matières premières.

5. Procédé selon la revendication 3 ou 4, dans lequel ledit chauffage du mélange de matières premières est réalisé pendant environ 1 à 15 jours.
